# EUROPÄISCHE PATENTSCHRIFT

(11) **EP 4 530 205 B1**
(45) Veröffentlichungstag und Bekanntmachung des Hinweises auf die Patenterteilung: **08.07.2026**
(21) Anmeldenummer: 25155703.9
(22) Anmeldetag: 17.09.2021
(51) Int. Cl.: B65G 47/22, B65B 25/06, B65G 47/26, B65G 47/31, B65G 47/64, B65G 21/10, B65B 25/08

(54) **VORRICHTUNG UND VERFAHREN ZUM BEREITSTELLEN EINES PRODUKTSTROMS MIT ZUEINANDER AUSGERICHTETEN LEBENSMITTELPRODUKTEN AUF PRODUKTUNTERLEGERN**
DEVICE AND METHOD FOR PROVIDING A PRODUCT FLOW WITH FOOD PRODUCTS ALIGNED WITH EACH OTHER ON PRODUCT UNDERLAYING
DISPOSITIF ET PROCÉDÉ DE PRÉPARATION D'UN FLUX DE PRODUITS ALIMENTAIRES ALIGNÉS LES UNS AVEC LES AUTRES SUR DES SUPPORTS DE PRODUITS

(43) Veröffentlichungstag der Anmeldung: 02.04.2025
(62) Teilanmeldung aus: 21197418.3
(73) Patentinhaber: Albert Handtmann Maschinenfabrik GmbH & Co. KG, 88400 Biberach/Riss (DE)
(72) Erfinder: Müller, Stefan, 88367 Hohentengen (DE)
(74) Vertreter: Grünecker Patent- und Rechtsanwälte PartG mbB

(56) Entgegenhaltungen:
- DE-U1- 202010 011 406
- US-A- 2 442 250
- US-A- 3 051 581
- US-A- 3 269 082
- US-A- 3 870 139
- US-A- 4 421 222
- US-A- 4 852 717
- US-A1- 2008 173 519
- US-A1- 2014 126 986
- US-A1- 2016 297 618
- US-B1- 6 263 640

## Beschreibung

Die Erfindung betrifft eine Vorrichtung zum Bereitstellen eines Produktstroms mit zueinander ausgerichteten Lebensmittelprodukten auf Produktunterlegern gemäß dem Oberbegriff des Anspruchs 1 und ein entsprechendes Verfahren.

Die Herstellung von Lebensmittelprodukten, insbesondere Frischprodukten wie beispielsweise Burger-Patties, Hackfleischportionen oder Frischkäsetaler ist bekanntermaßen auf Produktionslinien mit mehreren gegebenenfalls mittels Transportbändern aneinandergereihten Maschinen möglich, an deren Ende eine Verpackungsmaschine oder ein weiterführendes Prozessband steht. Solche Lebensmittelprodukte müssen oftmals auf den Transportbändern aufliegend gehandhabt werden. Dies ist der Formgebung und der Konsistenz der Lebensmittelprodukte geschuldet. Vor Verarbeitungsprozessen wie beispielsweise dem Braten, Frittieren oder Tiefkühlen weisen die Lebensmittelprodukte zumeist eine vergleichsweise weiche und nachgiebige Konsistenz auf, sind also während der Handhabung nicht von sich aus formstabil, sondern plastisch verformbar.

Aufgrund dieser Produkteigenschaften und der erforderlichen Ablage der Lebensmittelprodukte auf den Transportbändern können deren Ablagepositionen quer zur Transportrichtung so stark variieren, dass dies vor der weiteren Verarbeitung korrigiert werden muss, um eine ausreichend einheitliche Querausrichtung herzustellen. Auch die Längsausrichtung der Lebensmittelprodukte zueinander, also die Transportabstände dazwischen, können so stark variieren, dass eine automatisierte Weiterverarbeitung behindert wird oder ohne Korrektur der Transportabstände nicht möglich ist. Eine solche Korrektur ist bekanntermaßen durch Aneinanderreihung von Transportbändern mit variabler Transportgeschwindigkeit möglich.

Eine grundsätzliche Herausforderung bei der beschriebenen Handhabung von Lebensmittelprodukten liegt in der zuverlässigen Übergabe der Lebensmittelprodukte von einem Transportband auf das nächste. Hierfür sind sowohl die jeweiligen Eigenschaften des Lebensmittelprodukts zu berücksichtigen als auch Vorrichtungsmerkmale wie beispielsweise der Durchmesser der Umlenkrollen am Anfang und Ende der Transportbänder, der jeweilige Sicherheitsabstand zwischen den Transportbändern, die Ausrichtung der Transportbänder zueinander und gegebenenfalls vorhandene Geschwindigkeitsunterschiede zwischen den aufeinanderfolgenden Transportbändern. Bandübergänge sind daher potentielle Fehlerquellen für den Produktionsprozess.

Andererseits erfordern bestimmte Prozessschritte zugehörige Bandübergänge, wie beispielsweise das Ausrichten der Lebensmittelprodukte auf den Transportbändern sowie das Zuführen blattförmiger Produktunterleger, wie beispielsweise Trägerpapiere, für die einzelnen Produkte.

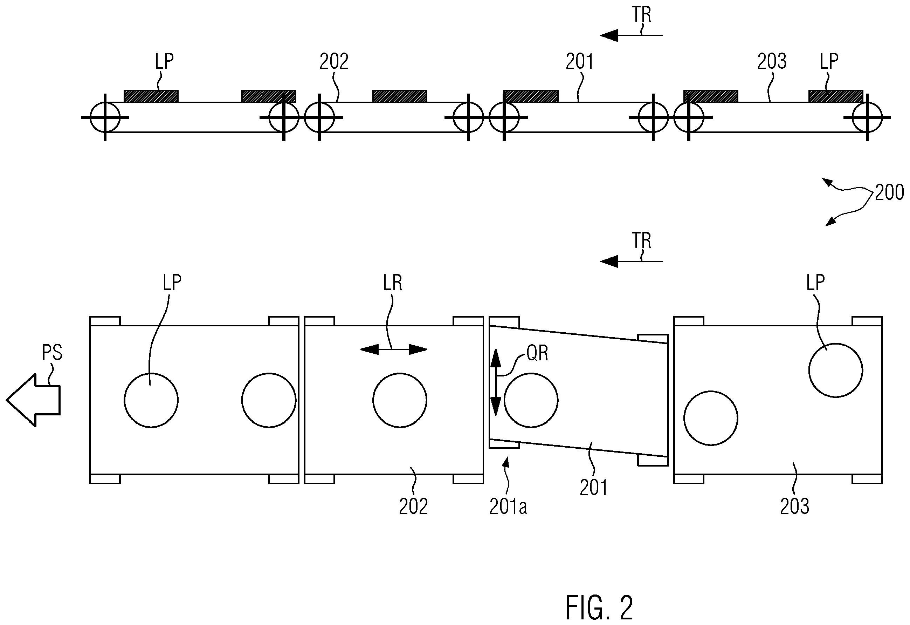

So ist beispielsweise aus dem Stand der Technik eine in der Figur 2 beispielhaft und schematisch dargestellte Vorrichtung 200 zum Ausrichten von Lebensmittelprodukten LP in Querrichtung QR bezüglich einer Transportrichtung TR und in einer dazu parallelen Längsrichtung LR bekannt. Die Vorrichtung 200 umfasst zu diesem Zweck wenigstens ein erstes Transportband 201, dessen ausgangsseitige Umlenkrolle in der Querrichtung QR verstellbar ist, und ein daran anschließendes zweites Transportband 202, dessen Transportgeschwindigkeit variiert werden kann. Wie in der Figur 2 angedeutet ist, wird zu diesem Zweck das ausgangsseitige Ende 201a des ersten Transportbands 201 individuell für jedes Lebensmittelprodukt LP so verstellt, dass daraus ein Produktstrom PS mit in Querrichtung QR im Wesentlichen identisch ausgerichteten Lebensmittelprodukten LP resultiert. Zudem wird die Transportgeschwindigkeit des zweiten Transportbands 202 für die einzelnen Lebensmittelprodukte LP so variiert, dass die Lebensmittelprodukte LP im resultierenden Produktstrom PS im Wesentlichen identische Transportabstände aufweisen. Hierfür ist es bekanntermaßen erforderlich, die individuellen Querpositionen und Längspositionen der Lebensmittelprodukte LP stromaufwärts zu erfassen (nicht dargestellt), beispielsweise bildgebend an einem vorgelagerten Transportband 203.

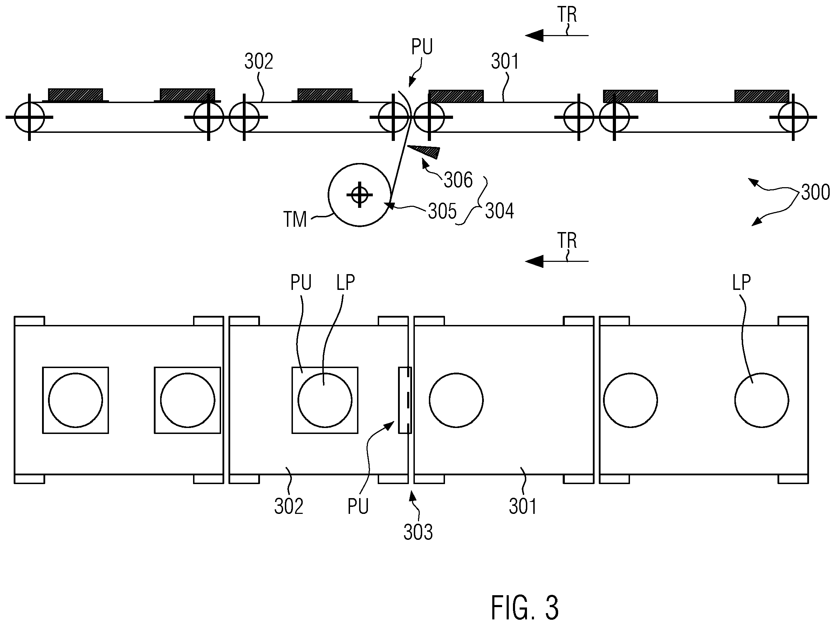

Bekannt ist ferner eine in der Figur 3 beispielhaft und schematisch dargestellte Vorrichtung 300 zum Zuführen blattförmiger Produktunterleger PU durch einen zwischen einem ersten Transportband 301 und einem anschließenden zweiten Transportband 302 ausgebildeten Bandübergang 303. Zu diesem Zweck umfasst die Vorrichtung 300 eine Unterlegvorrichtung 304 mit einer Abwickelvorrichtung 305 zum Abrollen eines bandförmigen Trägermaterials TM und mit einer Vereinzelungseinheit 306 zum Vereinzeln der Produktunterlagen PU, indem diese nacheinander vom bandförmigen Trägermaterial TM abgetrennt werden. Die Zuführung der einzelnen Produktunterlagen PU erfolgt synchron mit der Transportgeschwindigkeit der Lebensmittelprodukte LP von unten her unmittelbar vor diese, sodass jedes Lebensmittelprodukt LP auf einer Produktunterlage PU aufläuft und auf dieser vom zweiten Transportband 302 abtransportiert wird.

Nachteilig bei den beschriebenen Vorrichtungen 200, 300 und den damit ausgeführten Verfahren ist, dass zum Durchführen der jeweiligen Prozessschritte eine Vielzahl von Transportbändern 201, 202, 301, 302 sowie gegebenenfalls vor-, zwischen- und/oder nachgeschaltete Transportbänder erforderlich sind. Dies verursacht neben einem unerwünscht hohen apparativen Aufwand und Platzbedarf die Problemstellung, dass die vielen Bandübergänge potentielle Fehlerquellen sind und gegebenenfalls an unterschiedliche Lebensmittelprodukte LP angepasst werden müssen und/oder bestimmte Lebensmittelprodukte LP nicht zuverlässig handhaben können.

Aus der US 3 051 581 A ist eine Vorrichtung zum Ablegen von Produkten auf Produktunterlegern bekannt, wobei die Produkte geschindelt auf einem ersten Bandförderer antransportiert und derart gruppiert auf den Produktunterlegern liegend mit einem zweiten Bandförderer abtransportiert werden. Die Bandförderer sind auf Untergestellen gelagert, von denen eines beispielsweise mittels Linearführungen und eines Motors quer zur Transportrichtung verschoben werden kann. Auch die US 3 269 082 A offenbart die Gruppierung geschindelt antransportierter Produkte, dort beispielsweise von Schinkenscheiben, auf Produktunterlegern, welche die Produkte zusätzlich von oben abdecken. Das ausgangsseitige Ende des Zuförderers kann in Querrichtung verstellt werden.

Eine ähnliche Querverstellung eines Zuförderbands ist zudem aus der US 6 263 640 B1 bekannt, welche die Merkmale des Oberbegriffs des Anspruchs 1 offenbart. Es besteht daher Bedarf für demgegenüber verbesserte Vorrichtungen und Verfahren zum Bereitstellen eines Produktstroms, in welchem die einzelnen Lebensmittelprodukte sowohl in Querrichtung als auch in Längsrichtung zueinander geeignet ausgerichtet sind, und bei dem die Lebensmittelprodukte auf blattförmigen Produktunterlegern weiterverarbeitet werden können. Die gestellte Aufgabe wird mit einer Vorrichtung nach Anspruch 1 und einem Verfahren nach Anspruch 7 gelöst. Bevorzugte Ausführungsformen sind in den Unteransprüchen angegeben. Die Vorrichtung dient zum Bereitstellen eines Produktstroms im Wesentlichen bestehend aus zueinander ausgerichteten Lebensmittelprodukten auf Produktunterlegern. Die Vorrichtung umfasst zu diesem Zweck ein erstes Transportband zum Antransportieren und Querausrichten der Lebensmittelprodukte zueinander, ein an einem spaltförmigen Bandübergang in Transportrichtung daran anschließendes und mit erfindungsgemäß variabler Transportgeschwindigkeit separat steuerbares zweites Transportband zum Abtransportieren und Längsausrichten der Lebensmittelprodukte zueinander, und eine Unterlegvorrichtung zum Zuführen der Produktunterleger von unten durch den Bandübergang vor/unter die jeweils über den Bandübergang transportierten Lebensmittelprodukte. Die Transportbandgeschwindigkeit des ersten Transportbandes kann ebenfalls variabel und vom zweiten Transportband unabhängig steuerbar gestaltet sein.

Zum Ausrichten der Lebensmittelprodukte und zum Bereitstellen der Lebensmittelprodukte auf Produktunterlegern wird somit nur ein einziger Bandübergang benötigt sowie die dem Bandübergang zugeordnete Unterlegvorrichtung. Somit lassen sich apparativer Aufwand, Platzbedarf und Anzahl der insgesamt erforderlichen Bandübergänge und somit deren Störpotential minimieren.

Die Lebensmittelprodukte haben insbesondere eine plastisch verformbare Konsistenz. Plastische Verformung ist beispielsweise durch Einwirken des Eigengewichts der Lebensmittelprodukte möglich, indem sich deren Gestalt beispielsweise an eine Auflagefläche oder Form anpasst. Die Lebensmittelprodukte sind insbesondere portionierte Frischprodukte, wie beispielsweise Fleischprodukte, Molkereiprodukte oder Teigwaren.

Die Produktunterleger sind als blattförmiges Trägermaterial zu verstehen, insbesondere aus Papier, Folie oder Vlies oder einem Verbundmaterial aus wenigstens zwei solchen Materialien. Die Produktunterleger dienen beispielsweise als Unterlage und/oder Zwischenlage für die Lebensmittelprodukte, wenn diese in einer Verpackung nebeneinandergelegt, geschindelt und/oder aufeinandergestapelt werden.

Der spaltförmige Bandübergang ist von wenigstens einer ausgangsseitigen Umlenkrolle des ersten Transportbands und wenigstens einer mit dazwischenliegendem Spalt daran anschließenden eingangsseitigen Umlenkrolle des zweiten Transportbands ausgebildet.

Die Querausrichtung erfolgt definitionsgemäß in einer seitlichen Querrichtung im Wesentlichen orthogonal zur Transportrichtung, die Längsausrichtung in einer zur Transportrichtung parallelen Längsrichtung.

Erfindungsgemäß kann das ausgangsseitige Ende des ersten Transportbands quer zur Transportrichtung in unterschiedliche seitliche Ausrichtstellungen maschinell / motorisch verstellt werden, um die Lebensmittelprodukte jeweils bezüglich der Unterlegvorrichtung und der bereitgestellten Produktunterleger individuell auszurichten. Es ist auch möglich, das eingangsseitige Ende (den Anfang) des ersten Transportbandes oder beide Transportbandenden motorisch in unterschiedliche seitliche Ausrichtstellungen zu verfahren.

Hierzu umfasst die Vorrichtung mindestens einen Stellantrieb, mit dem wenigstens das ausgangsseitige Ende des ersten Transportbands quer zur Transportrichtung in die unterschiedlichen Ausrichtstellungen gefahren werden kann, beispielsweise durch seitlich horizontales Verschieben. Der Anfang (das eingangsseitige Ende) des ersten Transportbands kann in einer seitlich, also quer zur Transportrichtung festgelegten Stellung angeordnet sein. Ein am Anfang des ersten Transportbands oder unmittelbar davor vorhandener Querversatz der einzelnen Lebensmittelprodukte bezüglich einer Solltransportbahn kann daher am ausgangsseitigen Ende des ersten Förderbands auf eine zulässige Abweichung reduziert oder eliminiert werden.

Mit einem einzigen zugeordneten Stellantrieb könnte das erste Transportband insgesamt in der Querrichtung in die Ausrichtstellungen verschoben werden. Mit separaten Stellantrieben für die eingangs- und ausgangsseitigen Enden des ersten Transportbands könnten diese sowohl örtlich als auch zeitlich besonders variabel zur Querausrichtung der Lebensmittelprodukte verschoben werden. Auch ließe sich beispielsweise ein maximaler relativer Querversatz zwischen eingangs- und ausgangsseitigen Enden an die jeweilige Querelastizität des ersten Förderbands gesteuert anpassen. Das eingangsseitige Ende könnte beispielsweise in geringerem Ausmaß querversetzt werden als das ausgangsseitige Ende.

Der eingangsseitige Querversatz kann am Anfang des ersten Transportbands oder stromaufwärts davon sensorisch ermittelt werden, beispielsweise bildgebend.

Vorzugsweise umfasst die Vorrichtung eine elektronische Steuervorrichtung, die dazu eingerichtet ist, das eingangsseitige und/oder ausgangsseitige Ende bei laufendem ersten Transportband in die jeweilige seitliche Ausrichtstellung zu stellen, bevor das jeweilige Lebensmittelprodukt den ihn zugeordneten Produktunterleger und/oder das zweite Transportband berührt. Dadurch lässt sich ein Verdrehen des Lebensmittelprodukts und/oder ein unerwünschtes Versetzen des Lebensmittelprodukts bezüglich des zugeordneten Produktunterlegers vermeiden.

Vorzugsweise ist die Steuervorrichtung dazu eingerichtet, die seitlichen Ausrichtstellungen ausgangsseitig wenigstens so lange beizubehalten, bis das dadurch jeweils ausgerichtete Lebensmittelprodukt das erste Transportband vollständig verlassen hat. Auch dies begünstigt eine korrekte Positionierung des Lebensmittelprodukts auf dem jeweiligen Produktunterleger.

Vorzugsweise ist die Steuervorrichtung dazu eingerichtet, die Transportgeschwindigkeiten des ersten und/oder des zweiten Transportbands zur Längsausrichtung der Lebensmittelprodukte zu verändern, wenn das Lebensmittelprodukt vom ersten Transportband und/oder mittels des zugeordneten Produktunterlegers vom zweiten Transportband transporttechnisch vollständig übernommen wurde und/oder der jeweils zugeordnete Produktunterleger in vereinzelter Form vorliegt. Die gemeinsame Längsausrichtung des Lebensmittelprodukts und Produktunterlegers ist dann vom Vorschub des Produktunterlegers entkoppelt möglich, insbesondere unmittelbar nachdem obige Bedingung erfüllt ist, um einen möglichst weitreichenden Ausgleich von Transportabständen zu ermöglichen.

Die Lebensmittelprodukte sind transporttechnisch vollständig übernommen, sobald sie nicht mehr auf dem jeweils unmittelbar vorgelagerten Transportband / Transportmittel aufliegen, dieses also vollständig verlassen haben. Es versteht sich hierbei, dass die Lebensmittelprodukte dann bereits überwiegend auf dem übernehmenden Transportband aufliegen, der geometrische Schwerpunkt der Lebensmittelprodukte also über dem übernehmenden Transportband liegt.

Die Produktunterleger werden durch sukzessives Abtrennen von einem bandförmigen Trägermaterial vereinzelt, könnten in einer nicht beanspruchten Alternative prinzipiell aber auch in vereinzelter Form gestapelt in einem an der Unterlegvorrichtung vorhandenen Magazin bereitgestellt werden.

Vorzugsweise ist die Steuervorrichtung dazu eingerichtet, die Transportgeschwindigkeiten und/oder Geschwindigkeitsverläufe des ersten und zweiten Transportbands sowie des Vorschubs der Produktunterleger für deren Zuführung vor/unter die Lebensmittelprodukte vorübergehend aneinander anzugleichen. Das heißt, das erste und zweite Transportband sowie die Unterlegvorrichtung arbeiten dann vorübergehend bei jedem einzelnen Zuführen und Unterlegen mit identischer Transport- und Vorschubgeschwindigkeit. Dies ermöglicht eine präzise und zuverlässige Zuführung der Produktunterleger vor und unter das jeweilige Lebensmittelprodukt.

Die Unterlegvorrichtung ist erfindungsgemäß zum Vereinzeln der Produktunterleger aus einem bandförmigen Trägermaterial ausgebildet, und die Vorschubgeschwindigkeit der Unterlegvorrichtung kann an die Transportgeschwindigkeit des ersten und/oder zweiten Transportbands angepasst werden, insbesondere um die Produktunterleger abzutrennen, solange die jeweils zugeordneten Lebensmittelprodukte noch nicht vollständig auf dem zweiten Transportband aufliegen. Dadurch lässt sich die Länge (Abmessung in Transportrichtung) der Produktunterleger an die jeweiligen Lebensmittelprodukte anpassen und reproduzierbar herstellen.

Die Vorschubgeschwindigkeit kann zumindest vorübergehend von der Transportgeschwindigkeit stromaufwärts und/oder stromabwärts abweichen. Beispielsweise kann der Vorschub des Trägermaterials zum Vereinzeln / Abtrennen des Produktunterlegers kurzzeitig unterbrochen oder verlangsamt werden. Die Länge der Produktunterleger kann prinzipiell variabel eingestellt werden, beispielsweise auch derart, dass auf einem entsprechend langen Produktunterleger zwei Lebensmittelprodukte abgelegt werden können, oder dass der Produktunterleger über das Lebensmittelprodukt umgeschlagen werden kann, um ein weiteres Lebensmittelprodukt darauf abzulegen.

Das erfindungsgemäße Verfahren dient zum Bereitstellen eines Produktstroms aus zueinander ausgerichteten Lebensmittelprodukten insbesondere mit plastisch verformbarer Konsistenz auf Produktunterlegern. Hierzu werden die Lebensmittelprodukte auf einem ersten Transportband antransportiert und durch dessen maschinelle Verstellung in Querrichtung zueinander ausgerichtet. Ferner werden die Produktunterleger am ausgangsseitigen Ende des ersten Transportbands von unten zugeführt und die Lebensmittelprodukte mittels der zugeführten Produktunterleger von einem in Transportrichtung anschließenden zweiten Transportband insbesondere einzeln übernommen und abtransportiert. Dabei werden die Lebensmittelprodukte durch Geschwindigkeitsanpassung des zweiten Transportbands insbesondere gegenüber dem ersten Transportband zueinander in Längsrichtung ausgerichtet und insbesondere ein Transportabstand zwischen den Lebensmittelprodukten vereinheitlicht. Ferner werden die Produktunterleger mit der Unterlegvorrichtung aus einem bandförmigen Trägermaterial vereinzelt, und die Vorschubgeschwindigkeit der Unterlegvorrichtung wird an die Transportgeschwindigkeit des ersten und/oder zweiten Transportbands angepasst. Dadurch lassen sich die bezüglich des Anspruchs 1 beschriebenen Vorteile erzielen. Auch die Transportgeschwindigkeit des ersten Transportbands kann angepasst / variiert werden, um die Einheitlichkeit des ausgangsseitigen Transportabstands der einzelnen Produkte zueinander zu unterstützen.

Vorzugsweise werden die Lebensmittelprodukte während ihres Transports durch maschinelles Verstellen des ausgangsseitigen Endes des ersten Transportbands quer zur Transportrichtung in individuelle seitliche Ausrichtstellungen bezüglich der zugeführten Produktunterleger automatisch ausgerichtet, jeweils bevor die Lebensmittelprodukte die Produktunterleger und/oder das zweite Transportband berühren. Demgegenüber muss der Anfang (das eingangsseitige Ende) des ersten Transportbands in Querrichtung nicht zwangsläufig verstellt werden, obwohl dies prinzipiell mittels eines gemeinsamen oder separaten Stellantriebs möglich ist. Somit lässt sich ein am Bandanfang vorhandener Querversatz zwischen den einzelnen Lebensmittelprodukten durch gezieltes Anfahren der individuellen Ausrichtstellungen am Bandende eliminieren oder zumindest minimieren.

Vorzugsweise werden die für die einzelnen Lebensmittelprodukte individuell eingenommen Ausrichtstellungen des ausgangsseitigen Endes des ersten Transportbands jeweils wenigstens solange beibehalten, bis das zugeordnete Lebensmittelprodukt das erste Transportband vollständig verlassen hat. Dies begünstigt jeweils eine korrekte Positionierung der Produktunterleger und der Lebensmittelprodukte zueinander.

Vorzugsweise werden die Transportgeschwindigkeiten des ersten und/oder zweiten Transportbands zur Längsausrichtung (Abstandsanpassung) der Lebensmittelprodukte zueinander maschinell verstellt, wenn und insbesondere sobald das jeweilige Lebensmittelprodukt jeweils transporttechnisch vollständig vom ersten Transportband und/oder mittels des zugeordneten Produktunterlegers vom zweiten Transportband übernommen ist und/oder der zugeordnete Produktunterleger vereinzelt vorliegt. Insbesondere liegen die Lebensmittelprodukte bei der Abstandsanpassung überwiegend und insbesondere vollständig auf dem jeweils zur Abstandsanpassung verwendeten Transportband auf, gegebenenfalls mittels des zugeordneten Produktunterlegers. Vorzugsweise werden die Geschwindigkeiten und/oder Geschwindigkeitsverläufe des ersten und zweiten Transportbands und die Vorschubgeschwindigkeit der Produktunterleger für deren Zuführung vorübergehend aneinander angeglichen / miteinander synchronisiert.

Erfindungsgemäß werden die Produktunterleger aus einem bandförmigen Trägermaterial unterhalb des ersten und/oder zweiten Transportbands vereinzelt und an deren Transportgeschwindigkeit angepasst zugeführt, beispielsweise vorübergehend geschwindigkeitssynchron mit diesen. Die Produktunterleger werden dann durch einen zwischen dem ersten und zweiten Transportband ausgebildeten Bandübergang jeweils von unten vor das zugeordnete Lebensmittelprodukt geführt, so dass dieses am Anfang des zweiten Transportbands auf dem Produktunterleger aufläuft und gemeinsam mit diesem auf dem zweiten Transportband in Längsrichtung ausgerichtet und abtransportiert wird. Die geschwindigkeitssynchrone Zuführung der Produktunterleger kann eine präzise Dimensionierung und Positionierung der Produktunterleger in Transportrichtung und deren zuverlässigen Transport mit den auflaufenden Lebensmittelprodukten begünstigen. Die Vereinzelung ist auch ohne gleichzeitige Geschwindigkeitssynchronisierung möglich, beispielsweise während vorübergehender Unterbrechung des Bandvorschubs (des Trägermaterials).

Vorzugsweise werden die Produktunterleger vom bandförmigen Trägermaterial abgetrennt, bevor das zugeordnete Lebensmittelprodukt vollständig auf dem zweiten Transportband aufliegt. Vorzugsweise werden zu korrigierende Querversätze und eingangsseitige Transportabstände der Lebensmittelprodukte stromaufwärts des ersten Transportbands und/oder an dessen Anfang (eingangsseitigem Ende) sensorisch erfasst und mittels des ersten und zweiten Transportbands kompensiert bzw. vereinheitlicht. Ein so festgestellter Querversatz zwischen den einzelnen Lebensmittelprodukten lässt sich durch Querverstellung des (ein- und / oder ausgangsseitigen) Endes des ersten Transportbands dann automatisch ebenso in vorteilhafter Weise korrigieren wie ein derart festgestellter Längsversatz bzw. ungleiche Transportabstände der Lebensmittelprodukte zueinander durch kompensierende Geschwindigkeitsanpassung des zweiten Transportbands und optional des ersten Transportbands.

Vorzugsweise wird das Verfahren bei durchweg kontinuierlicher Transportbewegung der Lebensmittelprodukte durchgeführt. Die Vorrichtung ist vorzugsweise zur Querausrichtung und Längsausrichtung der Lebensmittelprodukte und zur Zuführung der Produktunterleger jeweils während eines solchen kontinuierlichen Transports ausgebildet.

Eine bevorzugte Ausführungsform der Erfindung ist zeichnerisch dargestellt. Demnach zeigen:
- Figur 1: eine erfindungsgemäße Vorrichtung in schematischer Seitenansicht und Draufsicht;
- Figur 2: eine aus dem Stand der Technik bekannte Ausrichtvorrichtung in schematischer Seitenansicht und Draufsicht; und
- Figur 3: eine aus dem Stand der Technik bekannte Unterlegvorrichtung in schematischer Seitenansicht und Draufsicht.

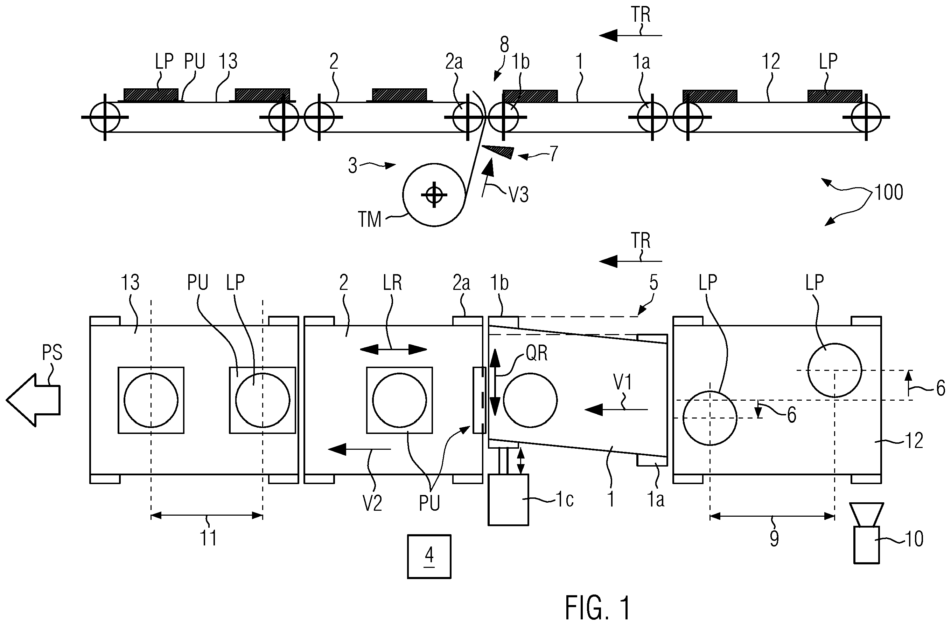

Wie die Figur 1 erkennen lässt, umfasst die erfindungsgemäße Vorrichtung 100 zum Bereitstellen eines Produktstroms PS aus zueinander ausgerichteten Lebensmittelprodukten LP auf Produktunterlegern PU gemäß einer bevorzugten Ausführungsform: ein erstes Transportband 1 zum Antransportieren der Lebensmittelprodukte LP mit einer ersten vorzugsweise variablen Transportgeschwindigkeit V1 sowie zum Ausrichten der Lebensmittelprodukte LP in Querrichtung QR zueinander; ein in Transportrichtung TR anschließendes und mit variabler zweiter Transportgeschwindigkeit V2 separat angetriebenes zweites Transportband 2 zum Ausrichten der Lebensmittelprodukte LP in Längsrichtung LR zueinander sowie zum Abtransportieren der Lebensmittelprodukte LP auf den Produktunterlegern PU; und eine Unterlegvorrichtung 3 zum Zuführen der Produktunterleger PU zwischen dem ersten und zweiten Transportband 1, 2 jeweils vor/unter die vom ersten Transportband 1 antransportierten und in Querrichtung QR ausgerichteten Lebensmittelprodukte LP.

Der Anfang (das eingangsseitige Ende) des ersten Transportbands 1 wird von einer in Querrichtung QR stationär oder optional seitlich beweglich angeordneten eingangsseitigen Umlenkrolle 1a gebildet, das (ausgangsseitige) Ende des ersten Transportbands 1 von einer im Wesentlichen horizontal in Querrichtung QR motorisch verschiebbaren ausgangsseitigen Umlenkrolle 1b.

Die ausgangsseitige Umlenkrolle 1b und optional auch die eingangsseitige Umlenkrolle 1a kann mittels wenigstens eines (lediglich schematisch angedeuteten) Stellantriebs 1c in der Querrichtung QR verstellt werden. Beispielsweise kann der eingangsseitigen Umlenkrolle 1a ein separater Stellantrieb 1c (nicht dargestellt) entsprechend zugeordnet sein. Denkbar ist zudem ein gemeinsamer Stellantrieb 1c für beide Umlenkrollen 1a, 1b, (nicht dargestellt) beispielsweise zum Verschieben des ersten Transportbands 1 in Querrichtung QR insgesamt.

Die Vorrichtung 100 umfasst eine elektronische Steuervorrichtung 4 zum Steuern / Regeln des wenigstens einen Stellantriebs 1c, um damit die eingangs- und/oder ausgangsseitige Umlenkrolle 1a, 1b des ersten Transportbands 1 für die einzelnen Lebensmittelprodukte LP in individuelle Ausrichtstellungen 5 zu fahren.

In der ausgangsseitigen Ausrichtstellung 5 des ersten Transportbands 1 ist das jeweilige Lebensmittelprodukt LP vorzugsweise mittig bezüglich der Unterlegvorrichtung 3 und/oder des Produktunterlegers PU in Querrichtung QR ausgerichtet.

Mit dem wenigstens einen Stellantrieb 1c und der Steuervorrichtung 4 lässt sich somit ein eingangsseitig am ersten Transportband 1 oder unmittelbar davor vorhandener und beispielsweise bezüglich einer mittigen Sollausrichtung des Produktstroms PS definierter Querversatz 6 der einzelnen Lebensmittelprodukte LP eliminieren oder auf ein vorgegebenes Ausmaß reduzieren. Die angefahrenen Ausrichtstellungen 5 kompensieren somit die eingangsseitigen Querversätze 6 einzelner Lebensmittelprodukte LP am ausgangsseitigen Ende des ersten Transportbands 1.

Eine hierfür geeignete Einrichtung der Steuervorrichtung 4 ist, wie für die anderen beschriebenen Steuerfunktionen, auf prinzipiell bekannte Weise mittels entsprechender Hardware und Software möglich und daher nicht im Detail beschrieben.

Die Steuervorrichtung 4 ist ferner dazu eingerichtet, die Transportgeschwindigkeit V1 des ersten Transportbands 1, die Transportgeschwindigkeit V2 des zweiten Transportbands 2 und die Vorschubgeschwindigkeit V3 der Unterlegvorrichtung 3 sowohl unabhängig voneinander einzustellen als auch in zeitlicher Synchronisation vorübergehend aneinander anzugleichen.

Zu diesem Zweck weisen das erste Transportband 1, das zweite Transportband 2 und die Unterlegvorrichtung 3 jeweils getrennte Antriebsmotoren (nicht dargestellt) für den Bandtransport bzw. Vorschub auf. Dabei kann es sich beispielsweise um Servomotoren handeln.

Die Unterlegvorrichtung 3 umfasst eine Vereinzelungsvorrichtung 7, mit der die einzelnen Produktunterleger PU von einem beispielsweise auf einer Rolle bereitgestellten bandförmigen Trägermaterial TM abgetrennt und somit vereinzelt werden können.

Schematisch angedeutet ist ferner, dass die Produktunterleger PU durch einen zwischen der ausgangsseitigen Umlenkrolle 1b des ersten Transportbands 1 und der eingangsseitigen Umlenkrolle 2a des zweiten Transportbands 2 gebildeten spaltförmigen Bandübergang 8 von unten her zugeführt werden, also hauptsächlich vertikal.

Die einzelnen Produktunterleger PU werden derart vor dem jeweils antransportierten Lebensmittelprodukt LP zugeführt, dass dieses auf den jeweiligen Produktunterleger PU aufläuft, wodurch dieser auf prinzipiell bekannte Weise von dem über den Bandübergang 8 laufenden Lebensmittelprodukt LP umgebogen und auf dem zweiten Transportband 2 aufgelegt wird. Dadurch können der Produktunterleger PU und das aufliegende Lebensmittelprodukt LP vom zweiten Transportband 2 übernommen und gemeinsam abtransportiert werden.

Das erste und zweite Transportband 1, 2 sowie die Unterlegvorrichtung 3 werden hierbei von der Steuervorrichtung 4 vorzugsweise wie folgt gesteuert / geregelt:
Beim Ausrichten der Lebensmittelprodukte LP in Querrichtung QR, also orthogonal zur Transportrichtung TR, wird die kompensatorische Seitwärtsbewegung der ausgangsseitigen Umlenkrolle 1b des ersten Transportbands 1 in die Ausrichtstellung 5 vorzugsweise abgeschlossen, solange sich das Lebensmittelprodukt LP noch vollständig auf dem ersten Transportband 1 befindet.

Berührt das Lebensmittelprodukt LP den zugeordneten Produktunterleger PU und/oder das zweite Transportband 2 erstmalig, ist die Querausrichtung des jeweiligen Lebensmittelprodukts LP dann bereits abgeschlossen. Dadurch lässt sich ein Verdrehen des Lebensmittelprodukts LP und/oder eine unerwünscht außermittige Positionierung des Lebensmittelprodukts LP auf dem zugeordneten Produktunterleger PU vermeiden.

Nachdem das soeben ausgerichtete Lebensmittelprodukt LP das erste Transportband 1 vollständig verlassen hat, wird die ausgangsseitige Umlenkrolle 1b des ersten Transportbands 1 zunächst wieder in eine einheitliche Ausgangsstellung zurückgefahren oder direkt in die nächste Ausrichtstellung 5 für das nachfolgende Lebensmittelprodukt LP bewegt. Auch dies dient einer möglichst präzisen Querausrichtung und mittigen Positionierung der Lebensmittelprodukte LP auf den zugeordneten Produktunterlegern PU.

Die einzelnen Lebensmittelprodukte LP werden zur Abstandsanpassung vorzugsweise erst dann in Längsrichtung LR, also in oder entgegen der Transportrichtung TR, zueinander ausgerichtet, wenn und insbesondere sobald sie jeweils im Wesentlichen vollständig vom ersten und/oder zweiten Transportband 1, 2 übernommen wurden. Dadurch lässt sich vermeiden, dass sich die Längsausrichtung zum einen und die Vereinzelung sowie Zuführung der Produktunterleger zum anderen gegenseitig stören können. Unter einer vollständigen Übernahme der Lebensmittelprodukte LP ist hier zu verstehen, dass sie nicht mehr auf dem jeweils unmittelbar vorgelagerten Transportband oder dergleichen Transportmittel aufliegen, dieses also transporttechnisch bereits vollständig verlassen haben.

Die Vorschubgeschwindigkeit V3 der Produktunterleger PU und die Transportgeschwindigkeiten V1, V2 des ersten und zweiten Transportbands 1, 2 werden vorzugsweise wenigstens ab dem Zeitpunkt, an dem das jeweilige Lebensmittelprodukt LP den zugeordneten Produktunterleger PU erstmalig berührt, von der Steuervorrichtung 4 aneinander angeglichen. Diese löst dann zudem mit geeigneter zeitlicher Verzögerung die zugehörige Vereinzelung aus, also das Abtrennen der einzelnen Produktunterleger PU vom bandförmigen Trägermaterial TM.

Die miteinander synchronisierten Transport-/ Vorschubgeschwindigkeiten V1, V2, V3 können sowohl konstant sein als auch ein geeignetes Geschwindigkeitsprofil aufweisen.

Die Steuervorrichtung 4 löst die Vereinzelung beispielsweise so aus, dass die Produktunterleger PU dann abgetrennt sind, wenn das jeweilige Lebensmittelprodukt LP überwiegend und insbesondere vollständig auf dem zweiten Transportband 2 und auf dem zugeordneten Produktunterleger PU aufliegt.

Vorzugsweise erfolgt die Vereinzelung der Produktunterleger PU zu einem Zeitpunkt, an dem diese bereits zwischen dem zweiten Transportband 2 und dem zugeordneten Lebensmittelprodukt PU eingeklemmt und somit vom zweiten Transportband 2 gezogen werden können. Ab diesem Zeitpunkt ist ein aktiver Vorschub des jeweiligen Produktunterlegers PU durch die Unterlegvorrichtung 3 entbehrlich, so dass der Produktunterleger PU vom geeignet vorgeschobenen Trägermaterial TM abgetrennt werden kann. Dadurch lässt sich die Länge der Produktunterleger PU auf flexible Weise passend zu den jeweiligen Lebensmittelprodukten LP und/oder entsprechend spezieller Produktionsanforderungen herstellen.

Andererseits erfolgt die Vereinzelung vorzugsweise so frühzeitig, dass das hintere Ende des abgetrennten Produktunterlegers PU den Abstand zwischen dem Ort der Vereinzelung, also beispielsweise einer Schneide zum Durchtrennen des Trägermaterials TM, und dem zweiten Transportband 2 passend zum hinteren Ende des oberhalb transportierten Lebensmittelprodukts LP rechtzeitig durchläuft. Damit lassen sich unpassend lange Produktunterleger PU vermeiden.

Neben dem eingangsseitigen Querversatz 6 der einzelnen Lebensmittelprodukte LP beispielsweise bezüglich mittiger Sollausrichtung des Produktstroms PS wird ferner ein eingangsseitiger Transportabstand 9 zwischen den einzelnen Lebensmittelprodukten LP sensorisch erfasst, beispielsweise mittels einer in der Figur 1 schematisch angedeuteten Kamera 10, einem Abstandssensor oder dergleichen. Die Erfassung des eingangsseitigen Transportabstands 9 kann auch auf der Eingangsseite des ersten Transportbands 1 erfolgen.

Durch Geschwindigkeitsanpassung des ersten und/oder zweiten Transportbands 2 wird ein prozessbedingt ungleichmäßiger eingangsseitiger Transportabstand 9 zwischen den Lebensmittelprodukten LP in einen im Wesentlichen einheitlichen ausgangsseitigen Transportabstand 11 korrigiert. Das zweite Transportband 2 ist hierfür vorzugsweise zum Transport von je einem Lebensmittelprodukt LP ausgelegt, so dass die einzelnen Lebensmittelprodukte LP durch jeweils zugeordnete Geschwindigkeitsanpassungen des zweiten Transportbands 2 unabhängig voneinander im einheitlichen ausgangsseitigen Transportabstand 11 zum jeweils vorauslaufenden Lebensmittelprodukt LP im Produktstrom PS angeordnet werden können.

Beispielhaft dargestellt sind ferner ein zuführendes Transportband 12 sowie eines abführendes Transportband 13, die auf prinzipiell bekannte Weise an das erste und zweite Transportband 1, 2 anschließen.

Um ein separates eingangs- und/oder ausgangsseitiges Verstellen des ersten Transportbands 1 in Querrichtung QR zu begünstigen, kann das erste Transportband 1 beispielsweise aus mehreren nebeneinander angeordneten und parallel zueinander verlaufenden Rundriemen aufgebaut sein. Prinzipiell kann das erste Transportband 1 aber auch wenigstens ein elastisches Flachband aufweisen.

Die Transportgeschwindigkeit V2 des zweiten Transportbands 2 und optional die Transportgeschwindigkeit V1 des ersten Transportbands 1 lässt sich auf prinzipiell bekannte Weise so regeln, dass die eingangsseitigen Transportabstände 9 zwischen den einzelnen Lebensmittelprodukten LP durch vorübergehende Erhöhung oder Absenkung der jeweiligen Transportgeschwindigkeit V1, V2 verändert werden können. Der Bereich möglicher Abstandskorrekturen zur Herstellung des ausgangsseitigen Transportabstands 11 richtet sich nach der Länge der Lebensmittelprodukte LP, der Länge des jeweiligen Transportbands 1, 2 und der Variationsbreite seiner Transportgeschwindigkeit V1, V2.

Die Unterlegvorrichtung 3 kann in prinzipiell bekannter Weise so arbeiten, dass deren Vorschubgeschwindigkeit V3 spätestens dann an die Transportgeschwindigkeiten V1, V2 der Transportbänder 1, 2 angepasst wird, wenn das Lebensmittelprodukt LP den nach oben überstehenden Anfang (das in Transportrichtung weisende Ende) des Produktunterlegers PU erreicht. Sobald der Produktunterleger PU vom zweiten Transportband 2 und dem darauf liegenden Lebensmittelprodukt LP transporttechnisch übernommen wurde und die gewünschte Länge des Produktunterlegers PU erreicht ist, wird dieser vom bandförmigen Trägermaterial TM abgetrennt.

Die Zuführung des Produktunterlegers PU erfolgt hierbei jeweils von unten durch den am Bandübergang 8 ausgebildeten Querspalt, der in prinzipiell bekannter Weise zwischen dem ersten und zweiten Transportband 1, 2 ausgebildet werden kann.

Somit lässt sich durch geeignet zeitlich gesteuertes / geregeltes Positionieren der ausgangsseitigen Umlenkrolle 1b des ersten Transportbands 1 in der individuellen Ausrichtstellung 5, der unmittelbar daran anschließenden Vereinzelung und Zuführung zugeordneter Produktunterleger PU und der wiederum unmittelbar daran anschließenden individuellen Geschwindigkeitsanpassung des zweiten Transportbands 2 ein kombinierter Verarbeitungsprozess zum Quer- und Längsausrichten der Lebensmittelprodukte LP zueinander sowie zu deren Bereitstellung auf Produktunterlegern PU mit vergleichsweise geringem apparativen Aufwand und geringer Störanfälligkeit im Bereich eines einzigen Bandübergangs 8 und der zugehörigen Transportbänder 1, 2 während des kontinuierlichen (ununterbrochenen) Transports der Lebensmittelprodukte LP durchführen.

## Patentansprüche

1. Vorrichtung (100) zum Bereitstellen eines Produktstroms (PS) aus zueinander ausgerichteten Lebensmittelprodukten (LP) auf Produktunterlegern (PU), umfassend: ein erstes Transportband (1), insbesondere mit variabler Transportgeschwindigkeit (V1), zum Antransportieren und Querausrichten der Lebensmittelprodukte zueinander; ein an einem spaltförmigen Bandübergang (8) in Transportrichtung (TR) daran anschließendes zweites Transportband (2) zum Abtransportieren der Lebensmittelprodukte; und eine Unterlegvorrichtung (3) zum Zuführen der Produktunterleger von unten durch den Bandübergang vor/unter die jeweils über den Bandübergang transportierten Lebensmittelprodukte, **gekennzeichnet durch** wenigstens einen Stellantrieb (1c), mit dem das ausgangsseitige und insbesondere auch das eingangsseitige Ende des ersten Transportbands (1) quer zur Transportrichtung (TR) in unterschiedliche Ausrichtstellungen (5) verschoben werden kann, um die Lebensmittelprodukte (LP) jeweils bezüglich der Unterlegvorrichtung (3) individuell auszurichten, wobei das zweite Transportband (2) zum Längsausrichten der Lebensmittelprodukte zueinander mit variabler Transportgeschwindigkeit (V2) separat steuerbar ist, und wobei die Unterlegvorrichtung (3) zum Vereinzeln der Produktunterleger (PU) aus einem bandförmigen Trägermaterial (TM) ausgebildet ist und die Vorschubgeschwindigkeit (V3) der Unterlegvorrichtung an die Transportgeschwindigkeit (V1, V2) des ersten und/oder zweiten Transportbands (1, 2) angepasst werden kann.

2. Vorrichtung nach Anspruch 1, mit einer Steuervorrichtung (4), die dazu eingerichtet ist, bei laufendem ersten Transportband (1) das Anfahren der jeweiligen Ausrichtstellung (5) zu beenden, bevor das jeweilige Lebensmittelprodukt den ihm zugeordneten Produktunterleger (PU) und/oder das zweite Transportband (2) berührt.

3. Vorrichtung nach Anspruch 1 oder 2, mit einer Steuervorrichtung (4), die dazu eingerichtet ist, die Ausrichtstellungen (5) wenigstens so lange beizubehalten, bis das dadurch jeweils ausgerichtete Lebensmittelprodukt (LP) das erste Transportband (1) vollständig verlassen hat.

4. Vorrichtung nach wenigstens einem der vorigen Ansprüche, mit einer Steuervorrichtung (4), die dazu eingerichtet ist, die Transportgeschwindigkeit (V1, V2) des ersten und/oder zweiten Transportbands (1, 2) zur Längsausrichtung der Lebensmittelprodukte (LP) automatisch zu verstellen, wenn und insbesondere sobald das Lebensmittelprodukt (LP) im Wesentlichen vollständig vom ersten Transportband oder mittels des zugeordneten Produktunterlegers (PU) vom dem zweiten Transportband (2) übernommen ist und/oder der zugeordnete Produktunterleger in vereinzelter Form vorliegt.

5. Vorrichtung nach wenigstens einem der vorigen Ansprüche, mit einer Steuervorrichtung (4), die dazu eingerichtet ist, die Transportgeschwindigkeiten (V1, V2) / Geschwindigkeitsverläufe des ersten und zweiten Transportbands (1, 2) und die Vorschubgeschwindigkeit (V3) der Produktunterleger (PU) für deren Zuführung und das Auflegen der Lebensmittelprodukte (LP) vorübergehend aneinander anzugleichen.

6. Vorrichtung nach wenigstens einem der vorigen Ansprüche, wobei die Vorschubgeschwindigkeit (V3) der Unterlegvorrichtung an die Transportgeschwindigkeit (V1, V2) des ersten und/oder zweiten Transportbands (1, 2) angepasst werden kann, um die Produktunterleger abzutrennen, solange die jeweils zugeordneten Lebensmittelprodukte (LP) noch nicht vollständig auf dem zweiten Transportband aufliegen.

7. Verfahren zum Bereitstellen eines Produktstroms (PS) aus zueinander ausgerichteten Lebensmittelprodukten (LP) insbesondere mit plastisch verformbarer Konsistenz auf Produktunterlegern (PU) mittels einer Vorrichtung nach einem der vorhergehenden Ansprüche 1-6, wobei die Lebensmittelprodukte auf einem ersten Transportband (1) antransportiert und durch maschinelle Verstellung mindestens einer Umlenkrolle des ersten Transportbands in Querrichtung (QR) zueinander ausgerichtet werden, wobei die Produktunterleger am ausgangsseitigen Ende des ersten Transportbands von unten zugeführt und die Lebensmittelprodukte mittels der zugeführten Produktunterleger von einem in Transportrichtung anschließenden zweiten Transportband (2) übernommen und abtransportiert werden, und wobei die Lebensmittelprodukte durch Geschwindigkeitsanpassung des ersten und oder zweiten Transportbands zueinander in Längsrichtung (LR) ausgerichtet und insbesondere dadurch ein Transportabstand (11) zwischen den Lebensmittelprodukten vereinheitlicht wird.

8. Verfahren nach Anspruch 7, wobei die Lebensmittelprodukte (LP) während ihres Transports durch maschinelles Verstellen des eingangsseitigen und/oder ausgangsseitigen Endes des ersten Transportbands (1) quer zur Transportrichtung (TR) in individuelle Ausrichtstellungen (5) bezüglich der zugeführten Produktunterleger (PU) ausgerichtet werden, bevor die Lebensmittelprodukte die Produktunterleger und/oder das zweite Transportband (2) berühren.

9. Verfahren nach Anspruch 8, wobei die für die einzelnen Lebensmittelprodukte (LP) individuell eingenommenen Ausrichtstellungen (5) des ausgangsseitigen Endes jeweils wenigstens so lange beibehalten werden, bis das zugeordnete Lebensmittelprodukt das erste Transportband (1) vollständig verlassen hat.

10. Verfahren nach einem der Ansprüche 7 bis 9, wobei die Transportgeschwindigkeit (V1, V2) des ersten und/oder zweiten Transportbands (1, 2) zur Längsausrichtung / Abstandsanpassung der Lebensmittelprodukte (LP) maschinell verstellt wird, wenn und insbesondere sobald das jeweilige Lebensmittelprodukt transporttechnisch vollständig vom ersten Transportband bzw. mittels des zugeordneten Produktunterlegers (PU) vom zweiten Transportband übernommen ist und/oder der zugeordnete Produktunterleger vereinzelt vorliegt.

11. Verfahren nach wenigstens einem der Ansprüche 7 bis 10, wobei die Transportgeschwindigkeiten (V1, V2) / Geschwindigkeitsverläufe des ersten und zweiten Transportbands und (1, 2) die Vorschubgeschwindigkeit (V3) der Produktunterleger (PU) für deren Zuführung vorübergehend aneinander angeglichen werden.

12. Verfahren nach wenigstens einem der Ansprüche 7 bis 11, wobei die Produktunterleger (PU) aus einem bandförmigen Trägermaterial (TM) unterhalb des ersten und/oder zweiten Transportbands (1, 2) vereinzelt und insbesondere geschwindigkeitssynchron mit diesen zugeführt werden.

13. Verfahren nach Anspruch 12, wobei die Produktunterleger (PU) vom bandförmigen Trägermaterial (TM) abgetrennt werden, bevor die jeweils zugeordneten Lebensmittelprodukte (LP) im Wesentlichen vollständig auf dem zweiten Transportband (2) aufliegen.

14. Verfahren nach wenigstens einem der Ansprüche 7 bis 13, wobei zu korrigierende Querversätze (6) und eingangsseitige Transportabstände (9) der Lebensmittelprodukte (LP) stromaufwärts des ersten Transportbands (1) und/oder an dessen Anfang sensorisch erfasst und mittels des ersten und zweiten Transportbands (1, 2) kompensiert bzw. vereinheitlicht werden.

## Claims

1. Device (100) for providing a product stream (PS) of mutually aligned food products (LP) on product substrates (PU), comprising: a first conveyor belt (1), in particular having a variable transport speed (V1), for the supply transport and mutual transverse alignment of said food products to each other; a second conveyor belt (2) that adjoins in the direction of transport (TR) at a gap-shaped belt transition (8), for the discharge transport of the food products; and a substrate placement device (3) for supplying said product substrates from below through said belt transition in front of/under said food products that are respectively transported across said belt transition, **characterized by** at least one actuator (1c) with which the end of said first conveyor belt (1) on the outlet side and in particular also the end on the inlet side can be displaced transverse to said direction of transport (TR) to different alignment positions (5) in order to align said food products (LP) individually with respect to said substrate placement device (3), wherein the second conveyor belt (2) can be controlled separately at a variable transport speed (V2) for the mutual longitudinal alignment of said food products to each other, and wherein said substrate placement device (3) is configured to separate said product substrates (PU) from a strip-shaped carrier material (TM), and said advancement speed (V3) of said substrate placement device can be adapted to said transport speed (V1, V2) of said first and/or said second conveyor belt (1, 2).

2. Device according to claim 1, with a control device (4) which is configured to terminate the movement to said respective alignment position (5) when said first conveyor belt (1) is running before said respective food product touches its associated product substrate (PU) and/or or said second conveyor belt (2).

3. Device according to claim 1 or 2 with a control device (4) that is configured to maintain said alignment positions (5) at least until said food product (LP) which has each been aligned thereby has left said first conveyor belt (1) entirely.

4. Device according to at least one of the preceding claims with a control device (4) which is configured to increase said transport speed (V1, V2) of said first and/or second conveyor belt (1, 2) in an automated manner for the longitudinal alignment of said food products (LP) when and in particular as soon as said food product (LP) has been received substantially entirely by said first conveyor belt or by way of said associated product substrate (PU) by said second conveyor belt (2), and/or when said associated product substrate is present in a separated manner.

5. Device according to at least one of the preceding claims with a control device (4) which is configured to temporarily match said transport speeds (V1, V2) / speed profiles of said first and said second conveyor belt (1, 2) and the advancement speed (V3) of said product substrate (PU) to one another for their supply and the placement of said food products (LP).

6. Device according to at least one of the preceding claims, where said advancement speed (V3) of said substrate placement device can be adapted to said transport speed (V1, V2) of said first and/or said second conveyor belt (1, 2), for severing said product substrates as long as said respectively associated food products (LP) are not yet resting entirely on said second conveyor belt.

7. Method for providing a product stream (PS) of mutually aligned food products (LP), in particular having a plastically deformable consistency, on product substrates (PU) by means of a device according to one of the preceding claims 1 to 6, where said food products are transported in on a first conveyor belt (1) and are aligned relative to one another in said transverse direction (QR) by adjustment of at least one deflection roller of said first conveyor belt by motor, where said product substrates are supplied from below at said end of said first conveyor belt on the outlet side and said food products are received and transported away by way of said supplied product substrates by a second conveyor belt (2) adjoining in said direction of transport, and where said food products are aligned relative to one another in said longitudinal direction (LR) by adjusting the speed of said first and/or said second conveyor belt, and in particular a transport spacing (11) between said food products is thus equalized.

8. Method according to claim 7, where said food products (LP) are aligned during their transport by an adjustment, by motor, of said end of said first conveyor belt (1) on the inlet side and/or said end on the outlet-side transverse to said direction of transport (TR) to individual alignment positions (5) with respect to said supplied product substrates (PU) before said food products touch said product substrates and/or said second conveyor belt (2).

9. Method according to claim 8, wherein said alignment positions (5) of said end on the outlet side individually assumed for said individual food products (LP) are each maintained at least until said associated food product has left said first conveyor belt (1) entirely.

10. Method according to one of the claims 7 to 9, where said transport speeds (V1, V2) of said first and/or said second conveyor belt (1, 2) for the longitudinal alignment/spacing adjustment of said food products (LP) are aligned mechanically when and in particular as soon as said respective food product has been received entirely for transport by said first conveyor belt or by way of said associated product substrate (PU) by said second conveyor belt, and/or said associated product substrate is present in a separated manner.

11. Method according to at least one of the claims 7 to 10, where said transport speeds (V1, V2) / speed profiles of said first and said second conveyor belt (1, 2) and said advancement speed (V3) of said product substrate (PU) are matched to one another temporarily for their supply.

12. Method according to at least one of the claims 7 to 11, where said product substrates (PU) made of a strip-shaped carrier material (TM) are separated below said first and/or said second conveyor belt (1, 2) and in particular are supplied in a manner that is speed-synchronous with the latter.

13. Method according to claim 12, where said product substrates (PU) are severed from said strip-shaped carrier material (TM) before said respectively associated food products (LP) rest substantially entirely on said second conveyor belt (2).

14. Method according to at least one of the claims 7 to 13, where transverse offsets (6) and transport spacings (9) of said food products (LP) on the inlet side to be corrected are detected by sensors upstream of said first conveyor belt (1) and/or at its beginning and are compensated for or equalized by way of said first and said second conveyor belt (1, 2).

## Revendications

1. Dispositif (100) permettant de fournir un flux de produits (PS) constitués de produits alimentaires (LP) alignés les uns par rapport aux autres sur des supports de produit (PU), comprenant : une première bande transporteuse (1), en particulier à vitesse de transport variable (V1), permettant de transporter et d'aligner transversalement les produits alimentaires les uns par rapport aux autres ; une deuxième bande transporteuse (2) se rattachant à une transition de bande en forme de fente (8) dans la direction de transport (TR) et permettant de transporter les produits alimentaires ; et un dispositif de support (3) permettant d'acheminer les supports de produit par le bas à travers la transition de bande devant/sous les produits alimentaires respectivement transportés par la transition de bande, **caractérisé par** au moins un actionneur (1c) permettant de déplacer l'extrémité située côté sortie, et en particulier également l'extrémité située côté entrée, de la première bande transporteuse (1) transversalement par rapport à la direction de transport (TR) dans différentes positions d'alignement (5) afin d'aligner individuellement les produits alimentaires (LP) respectivement par rapport au dispositif de support (3), dans lequel la deuxième bande transporteuse (2) peut être commandée séparément afin d'aligner longitudinalement les produits alimentaires les uns par rapport aux autres à vitesse de transport variable (V2), et dans lequel le dispositif de support (3) est conçu pour individualiser les supports de produit (PU) à partir d'un matériau pour support (V3) en forme de bande et la vitesse d'avancée (V3) du dispositif de support peut être adaptée à la vitesse de transport (V1, V2) de la première et/ou de la deuxième bande transporteuse (1, 2).

2. Dispositif selon la revendication 1, comprenant un dispositif de commande (4) conçu pour arrêter l'adoption de la position d'alignement (5) respective lorsque la première bande transporteuse (1) est en fonctionnement, avant que le produit alimentaire respectif ne touche le support de produit (PU) qui lui est associé et/ou la deuxième bande transporteuse (2).

3. Dispositif selon la revendication 1 ou 2, comprenant un dispositif de commande (4) conçu pour maintenir les positions d'alignement (5) au moins jusqu'à ce que le produit alimentaire (LP) ainsi respectivement aligné ait complètement quitté la première bande transporteuse (1).

4. Dispositif selon au moins l'une quelconque des revendications précédentes, comprenant un dispositif de commande (4) conçu pour ajuster automatiquement la vitesse de transport (V1, V2) de la première et/ou de la deuxième bande transporteuse (1, 2) en vue de l'alignement longitudinal des produits alimentaires (LP), lorsque et en particulier dès que le produit alimentaire (LP) est essentiellement complètement pris en charge par la première bande transporteuse ou, au moyen du support de produit (PU) associé, par la deuxième bande transporteuse (2), et/ou dès que le support de produit associé se présente sous une forme individualisée.

5. Dispositif selon au moins l'une quelconque des revendications précédentes, comprenant un dispositif de commande (4) conçu pour uniformiser temporairement les vitesses de transport (V1, V2)/les courbes de vitesse des première et deuxième bandes transporteuse (1, 2) et la vitesse d'avancée (V3) des supports de produit (PU) en vue de leur alimentation et de la pose des produits alimentaires (LP).

6. Dispositif selon au moins l'une quelconque des revendications précédentes, dans lequel la vitesse d'avancée (V3) du dispositif de support peut être adaptée à la vitesse de transport (V1, V2) de la première et/ou de la deuxième bande transporteuse (1, 2), afin de séparer les supports de produit tant que les produits alimentaires (LP) respectivement associés ne reposent pas encore complètement sur la deuxième bande transporteuse.

7. Procédé de fourniture d'un flux de produits (PS), constitué de produits alimentaires (LP) alignés les uns avec les autres et présentant en particulier une consistance plastiquement déformable, sur des supports de produit (PU) au moyen d'un dispositif selon l'une quelconque des revendications précédentes 1 à 6, dans lequel les produits alimentaires sont transportés sur une première bande transporteuse (1) et sont alignés les uns par rapport aux autres par ajustement mécanique d'au moins un rouleau de renvoi de la première bande transporteuse dans le sens transversal (QR), dans lequel les supports de produit sont alimentés par le bas au niveau de l'extrémité, située côté sortie, de la première bande transporteuse et les produits alimentaires, grâce aux supports de produit alimentés, sont pris en charge et transportés par une deuxième bande transporteuse (2) se rattachant dans le sens de transport, et dans lequel les produits alimentaires sont alignés les uns par rapport aux autres dans le sens longitudinal (LR) grâce à un ajustement de vitesse de la première et/ou de la deuxième bande transporteuse, et un espacement de transport (11) entre les produits alimentaires est en particulier uniformisé.

8. Procédé selon la revendication 7, dans lequel les produits alimentaires (LP), pendant leur transport, sont alignés dans des positions d'alignement (5) individuelles par rapport aux supports de produit (PU) alimentés, grâce à un ajustement mécanique de l'extrémité, située côté entrée et/ou côté sortie, de la première bande transporteuse (1) transversalement par rapport à la direction de transport (TR), avant que les produits alimentaires ne viennent en contact avec le support de produit et/ou avec la deuxième bande transporteuse (2).

9. Procédé selon la revendication 8, dans lequel les positions d'alignement (5) de l'extrémité située côté sortie adoptées individuellement pour les différents produits alimentaires (LP) sont maintenues respectivement au moins jusqu'à ce que le produit alimentaire associé ait complètement quitté la première bande transporteuse (1).

10. Procédé selon l'une quelconque des revendications 7 à 9, dans lequel la vitesse de transport (V1, V2) de la première et/ou de la deuxième bande transporteuse (1, 2) est ajustée mécaniquement en vue de l'alignement longitudinal/l'uniformisation d'espacement des produits alimentaires (LP), lorsque et en particulier dès que le produit alimentaire respectif est complètement pris en charge en terme de transport par la première bande transporteuse ou, au moyen du support de produit (PU) associé, par la deuxième bande transporteuse et/ou dès que le support de produit associé se présente de manière individualisée.

11. Procédé selon au moins l'une quelconque des revendications 7 à 10, dans lequel les vitesses de transport (V1, V2)/les courbes de vitesse des première et deuxième bandes transporteuses (1, 2) et la vitesse d'avancée (V3) des supports de produit (PU) sont temporairement uniformisées les unes par rapport aux autres en vue de l'alimentation des dits supports de produit.

12. Procédé selon au moins l'une quelconque des revendications 7 à 11, dans lequel les supports de produit (PU) sont alimentés de manière individualisée, à partir d'un matériau pour support (TM) en forme de bande, en dessous de la première et/ou de la deuxième bande transporteuse (1, 2), et en particulier de manière synchrone avec celle(s)-ci.

13. Procédé selon la revendication 12, dans lequel les supports de produit (PU) sont séparés du matériau pour support (TM) en forme de bande avant que les produits alimentaires (LP) respectivement associés ne reposent essentiellement complètement sur la deuxième bande transporteuse (2).

14. Procédé selon au moins l'une quelconque des revendications 7 à 13, dans lequel des décalages transversaux (6) à corriger et des espacements de transport (9), situés côté entrée, des produits alimentaires (LP) sont détectés par capteur en amont de la première bande transporteuse (1) et/ou au début de celle-ci et sont compensés ou uniformisés au moyen des première et deuxième bandes transporteuses (1, 2).
